# DEMANDE DE BREVET EUROPEEN

(11) **EP 0 555 166 A1**
(43) Date de publication de la demande: **11.08.1993**
(21) Numéro de dépôt: 93430001.3
(22) Date de dépôt: 05.02.1993
(51) Int. Cl.: B29C 33/50, A23G 3/02

(54) **Dispositif et procédé de démoulage d'objets renfermés dans un moule déformable, notamment un bac à glaçons**

(30) Priorité: 07.02.1992 FR 9201646
(71) Demandeur: B.I.I. S.A.R.L., F-84500 Bollene (FR)
(72) Inventeur:
(74) Mandataire: Rinuy, Santarelli

(57) **Abrégé**

Dispositif de démoulage d'objets renfermés dans un moule ouvert en matière déformable en toutes les directions, comprenant un bloc (1) de moulage muni d'une pluralité de chambres (2) de moulage , ledit bloc (1) étant associé à un moyen de déplacement en translation, et étant maintenu et tendu par ses bords (15) latéraux, comportant des moyens (5a, 5b, 5c, 5d) d'écartement simultanément transversal et longitudinal des parois latérales (2L) des chambres de moulage et des moyens (5a, 5b, 5c, 5d) de percussion et d'enfoncement simultanés de la base (3) des chambres (2) de moulage et procédé d'utilisation.

## Description

La présente invention concerne un dispositif et un procédé de démoulage d'objets renfermés dans un moule ouvert en matière déformable, notamment un bac à glaçons.

De nombreuses industries, notamment l'industrie alimentaire, mettent en oeuvre des moules pour l'élaboration de leurs produits. Souvent, surtout lorsque les moules sont réutilisables, le problème d'un démoulage rapide et efficace se pose.

La plupart du temps, le seul moyen efficace pour procéder au démoulage d'objets contenus dans les multiples alvéoles, ou chambres de moulage, d'un moule reste la méthode manuelle. Les personnes chargées du démoulage retournent le moule et appuient sur le fond de celui-ci généralement avec leurs doigts pour obtenir le démoulage des objets.

On connaît bien par FR-A- 2.260.300 un dispositif de démoulage de congelés comportant des chambres quasiment indéformables, à l'exception de leur fond, dans lequel l'éjection des produits moulés est obtenue grâce à l'action combinée d'un rouleau et de protubérances situées, soit sur le rouleau, soit au fond des chambres. Ces rouleaux agissent par simple enfoncement du fond des alvéoles. Le dispositif décrit comporte un dispositif d'expulsion supplémentaire disposé à la suite du rouleau presseur, ce qui montre que le démoulage n'est pas totalement fiable.

On connaît également par GB - A - 1.580.013 de la même société un dispositif et procédé de démoulage de produits gelés, dans lequel le fond des moules, nécessairement dirigé vers le haut est aspergé d'eau chaude, puis le fond des moules est martelé à l'aide de masselottes de frappe prévues aux extrémités de bras fixés radialement sur un arbre transversal commun, ce dernier étant animé d'un mouvement oscillant.

Il serait souhaitable de disposer d'un appareil de démoulage simple, rapide et efficace pour à la fois améliorer le rendement et la fiabilité de démoulage et de plus améliorer l'hygiène du démoulage dans le cas des produits alimentaires, que ceux-ci soient congelés ou non (produits secs tels que biscuits par exemple).

C'est pourquoi notamment la présente demande a pour objet un dispositif de démoulage d'objets renfermés dans un moule ouvert en matière déformable en toutes les directions, caractérisé en ce qu'il comprend un bloc de moulage muni d'une pluralité de chambres de moulage , ledit bloc étant associé à un moyen de déplacement en translation, et étant maintenu et tendu par ses bords latéraux, en ce qu'il comprend des moyens d'écartement simultanément transversal et longitudinal des parois latérales des chambres de moulage et en ce qu'il comprend des moyens de percussion et d'enfoncement simultanés de la base des chambres de moulage agissant de préférence lors de l'écartement des parois latérales.

Par "moule ouvert en matière déformable en toutes les directions" l'on entend un moule réalisé une matière plastique comme le caoutchouc, comportant des alvéoles ouvertes ou "chambres de moulage" et permettant notamment par pression à la partie inférieure du moule tout en maintenant au moins partiellement ses parties supérieures, de démouler l'objet moulé contenu. On peut citer notamment les blocs de type bacs souples à glacons.

Par "bloc de moulage", l'on entend un élément muni d'une pluralité de chambres de moulage ainsi que ses éventuels moyens latéraux de fixation destinés à le maintenir fermement, en coopération avec des éléments mobiles d'un support de blocs.

L'écartement des parois latérales est réalisé de préférence sur la totalité desdites parois, et est avantageusement plus important en haut des parois, c'est-à-dire du côté de la sortie des alvéoles. Par exemple, à la base l'écartement peut être nul ou presque, et augmenter plus l'on se dirige vers la sortie de l'alvéole.

Le maintien des bords latéraux du bloc de montage peut être obtenu à l'aide de moyens latéraux de fixation pouvant être constitués par exemple d'orifices prévus sur les côtés du bloc. Ces orifices peuvent notamment coopérer avec des moyens latéraux complémentaires de fixation ménagés latéralement sur le support de blocs tels que des ergots éventuellement filetés et l'élément de blocage correspondant, tel qu'un écrou. Les moyens latéraux complémentaires de fixation sont notamment situés sur un élément du type courroie ou chaîne par exemple.

Dans une mise en oeuvre préférée, les moyens latéraux complémentaires de fixation du bloc remplissent aussi la fonction d'entraînement en translation du bloc. Ils prendront alors notamment la forme de courroies de transmission actionnées par exemple par au moins une poulie rotative d'entraînement selon les techniques bien connues ; la partie extérieure de la courroie pourra être munie d'ergots éventuellement filetés capables de coopérer avec des orifices correspondants d'un ou plusieurs blocs de moulage successifs.

Les moyens d'écartement simultané latéral et longitudinal des parois latérales des chambres de moulage peuvent être séparés et de tout type connu tel qu'un écartement des courroies latérales au moment de la mise en oeuvre des moyens de percussion et d'enfoncement simultanés de la base des chambres de moulage combiné à une augmentation de l'espacement longitudinal des ergots.

Les moyens d'écartement longitudinal et transversal des parois latérales des chambres de moulage peuvent avantageusement être combinés et combinés aussi aux moyens de percussion et enfoncement simultané de la base desdites chambres, grâce à la mise en oeuvre d'un élément rotatif de démoulage.

L'élément particulier est un élément rotatif original, notamment un élément rotatif dont les parties extérieures affectent pendant leur rotation la forme d'un tonneau ou encore d'une olive procurant ainsi un écartement longitudinal et transversal des chambres de moulage.

L'élément rotatif remplit avantageusement une troisième fonction, de percussion de la base des chambres de démoulage simultanément à l'écartement latéral et longitudinal et une quatrième, d'enfoncement desdites bases, lorsque l'élément rotatif est constitué d'une pluralité de rouleaux de démoulage. Ceux-ci peuvent être notamment constitués d'axes parallèles entre eux et à l'axe de rotation de l'élément rotatif, tout en étant sensiblement perpendiculaires à la direction de déplacement du bloc de moulage. Ces axes comportent une pluralité de rondelles de diamètres tels que la forme générale de l'ensemble des rondelles d'un même rouleau affecte aussi la forme d'un tonneau.

Dans un tel cas, l'élément rotatif est constitué de plusieurs, par exemple quatre rouleaux individuels chacun en forme de tonneau et la rotation de cet élément crée une forme virtuelle de tonneau.

La percussion et l'enfoncement interviennent alors en même temps que l'écartement des parois.

C'est pourquoi la présente demande a notamment pour objet, un dispositif tel que ci-dessus décrit, caractérisé en ce que le bloc de moulage se déplace sur un élément rotatif de démoulage comportant en même temps des moyens de pression et d'enfoncement simultanés de la base des chambres de moulage et des moyens d'écartement longitudinal et transversal desdites chambres, les parties périphériques dudit élément rotatif de démoulage se déplaçant en contact de la base du bloc de moulage et dans le même sens, selon une vitesse tangentielle de déplacement plus élevée que la vitesse de déplacement en translation du bloc de moulage.

Si le rouleaux sont cylindriques et non en forme de tonneau, l'élément rotatif remplit seulement les fonctions d'enfoncement et de percussion, et l'action de l'élélement rotatif doit être combinés à des moyens d'écartement des parois des chambres précédemment décrits.

Lors de son déplacement en translation, le bloc de moulage est maintenu transversalement légèrement tendu et vient alors en contact de l'élément rotatif dit de démoulage. L'élément rotatif exerce une certaine pression à la surface inférieure du bloc lorsque celui-ci se déplace sur l'élément, étant donné que le bloc est légèrement tendu avant d'arriver au niveau de l'élément rotatif, et que l'écartement transversal des côtés du bloc est maintenu inchangé. Ces moyens de pression provoquant des enfoncements doivent intervenir par saccades.

L'élément rotatif et chacun des rouleaux individuels qui le composent coopèrent avec le bloc de moulage de telle manière que la distance entre la base des chambres de moulage latérales à la périphérie du bloc de moulage et l'axe de l'élément rotatif est plus courte que le diamètre extérieur de la rondelle la plus périphérique et est maintenue en permanence sensiblement égale lors du passage du bloc de moulage sur l'élément rotatif. Les rondelles produisent ainsi par saccades des enfoncements au fond des chambres.

Il en est donc de même pour les autres chambres de moulage. L'écartement des rondelles est prévu, en coopération avec la translation du bloc de moulage, de telle manière que chaque chambre de moulage reçoit au minimum un et de préférence deux ou trois percussions et enfoncements lors de son passage sur l'élément rotatif. On obtient ainsi selon les réglages un démoulage partiel ou total des objets renfermés dans les moules.

Il est évident pour l'homme de l'art qu'il n'est pas nécessaire que chacun des rouleaux individuels de l'élément rotatif renferme autant de rondelles que le bloc de moulage ne comporte de rangées longitudinales de chambres de moulage. En effet dans le cas d'une pluralité de rouleaux individuels, des rouleaux successifs pourront renfermer des rondelles longitudinalement décalées les unes par rapport aux autres et la vitesse de rotation de l'élément rotatif pourra être réglée de telle manière que chaque chambre subisse le nombre de chocs désiré, alors qu'au même moment les bords extérieurs des moules sont écartés longitudinalement et transversalement en raison de la forme générale en tonneau de l'élément rotatif. Un tel cas est illustré ci-après.

L'élément rotatif renfermera avantageusement trois ou plus et de préférence quatre ou cinq rouleaux individuels de démoulage.

L'homme de l'art discerne clairement les différents avantages de polyvalence procurés par le dispositif selon la présente invention en plus de ses remarquables qualités d'efficacité.

En effet chacun des rouleaux de démoulage que comprend l'élément rotatif peut être conçu facilement démontable et toute possibilité est offerte relativement à l'espacement et au diamètre des rondelles en sélectionnant leur diamètre, leur épaisseur et la largeur des entretoises qui les séparent de même qu'en ce qui concerne la vitesse de rotation de l'élément rotatif.

De plus, toute combinaison est possible avec un déplacement de translation tant continu qu'alternatif du ou des blocs de moulage ainsi que de la vitesse de déplacement ou le temps d'arrêt des blocs.

L'enfoncement de la percussion peut aussi être facilement réglé selon, en gardant les mêmes rouleaux et rondelles, l'écartement des axes de chaque rouleau individuel vis à vis de l'axe de rotation de l'élément rotatif.

De même l'écartement de ces axes étant fixé, il est possible de sélectionner le diamètre souhaité des rondelles de même que le "diamètre" apparent du tonneau.

Les rondelles sont un élément important de la présente invention et elles sont avantageusement individuellement libres de rotation autour de leur axe. Pour diminuer au maximum les frottements, voire presque les annuler, ces rondelles peuvent être en matériau de tout type , par exemple le nylon, mais peuvent être par exemple réalisées en métal et recou- vertes d'un matériau anti-adhésif tel que par exemple le Téflon _{R}.

Pour diminuer encore les frottements, l'axe des rouleaux qui porte les rondelles peut être même libre de rotation vis à vis des supports des rouleaux.

Comme on l'a vu, l'élément rotatif dit de démoulage est entraîné en rotation, de préférence dans la même direction que l'avancement du bloc de moulage et réglable, si désiré, indépendamment de celui-ci. Dans certains cas de démoulage on préférera au contraire une rotation en sens inverse.

Pour avoir une efficacité de démoulage maximale, la vitesse tangentielle de déplacement des éléments les plus périphériques de l'élément rotatif sera plus grande que la vitesse de déplacement en translation du bloc de moulage, par exemple 100 à 1000 fois supérieure. Le réglage de la vitesse de rotation en fonction de l'avancement du bloc de moulage est de la compétence de l'homme de l'art en fonction du résultat recherché. Par exemple le bloc se déplace à une vitesse de 0,01 m/s tandis que la vitesse tangentielle à la périphérie des roulettes sera de l'ordre de 2,2 m/s pour une vitesse de rotation d'environ 200 t/mn de l'élément rotatif.

La présente invention a aussi pour objet un procédé de démoulage d'objets renfermés dans un moule ouvert en matière déformable dans toutes les directions caractérisé en ce que l'on soumet un bloc de moulage muni d'une pluralité de chambres de moulage à une percussion et un enfoncement simultanés de la base desdites chambres de moulage, en écartant simultanément latéralement et longitudinalement les parois latérales desdites chambres de moulage.

Dans des conditions préférentielles de mise en oeuvre du procédé ci-dessus décrit, la percussion et l'enfoncement simultanés de la base des chambres de moulage sont obtenus à l'aide d'un élément rotatif.

Dans d'autres conditions préférentielles de mise en oeuvre du procédé ci-dessus décrit, l'écartement latéral et longitudinal des chambres de moulage est obtenu à l'aide d'un élément rotatif.

Dans encore d'autres conditions préférentielles de mise en oeuvre du procédé ci-dessus décrit, les deux éléments ci-dessus sont rassemblés en un élément unique.

L'élément rotatif unique ci-dessus comporte avantageusement une pluralité de rouleaux aux axes sensiblement perpendiculaires à la direction de déplacement du bloc de moulage, lesdits rouleaux étant munis de rondelles ayant le même axe que lesdits rouleaux, et étant de dimensions telles que la rotation des parties périphériques de l'élément rotatif décrit une forme générale en tonneau.

Les rondelles sont avantageusement libres en rotation.

Dans des conditions préférentielles de mise en oeuvre du procédé et dispositif ci-dessus, le déplacement du bloc de moulage renfermant les moules remplis est tout d'abord sensiblement rectiligne, par exemple horizontal, puis le bloc suit le rayon de courbure général de la partie la plus extérieure de l'élément rotatif dit de démoulage, et ensuite ce bloc reprend un mouvement rectiligne de déplacement après avoir tourné à 180° autour de l'axe de l'élément rotatif, les orifices du bloc se trouvent alors en dessous.

L'invention sera mieux comprise si l'on se réfère aux dessins annexés sur lesquels :
- La figure 1 schématise en vue longitudinale les positions relatives du bloc de moulage et de l'élément rotatif au moment du passage du bloc sur ledit élément rotatif et
- la figure 2 schématise, en coupe transversale, deux des quatre tonneaux que comprend le dispositif de la figure 1.

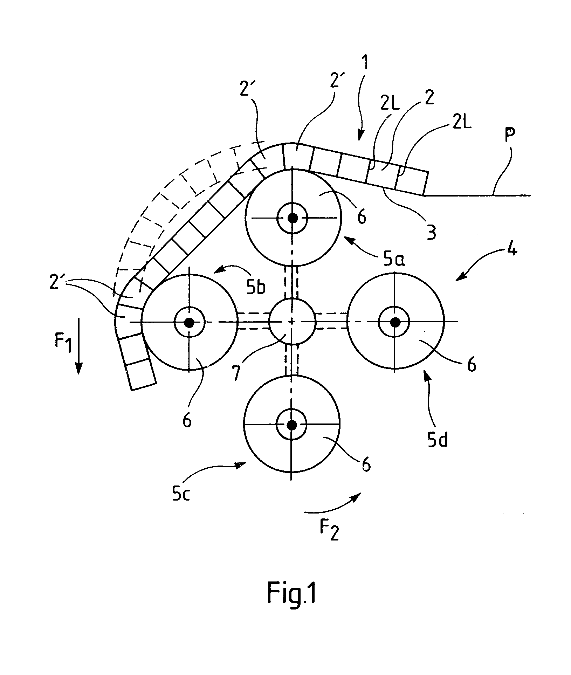

Sur la figure 1, on distingue le bloc de moulage 1 comprenant une pluralité de chambres de moulages 2, comportant des parois latérales 2L. Ce bloc de moulage se déplace dans le sens indiqué par la flèche F1 grâce à des moyens de déplacement et de fixation latéraux (non représentés ici).

P indique le plan de fixation et de maintien des bases 3 des chambres de moulage. Lors du passage sur l'élément rotatif, les bases sont toujours maintenues dans cette position relative. Toutefois, en raison de la dimension des roulettes et de l'écartement de leur axe de rotation vis à vis de l'axe de l'élément rotatif, chacune des chambres est soumise à ce niveau d'une part à un écartement de ses parois latérales 2L et d'autre part à des percussions et enfoncements à sa base.

Sur la partie gauche du dessin on a représenté en pointillés la forme que prend le bloc de moulage lors du passage des rondelles ; on voit qu'une chambre représentée ici comme étant un parallélépipède rectangle après ou avant passage sur l'élément rotatif, prend une forme de trapèze en raison de l'écartement longitudinal des bords supérieurs de ses parois au passage des rondelles. Sur le schéma on observe l'écartement longitudinal au niveau des alvéoles 2'. Compte tenu du type de coupe schématisé ici, l'écartement transversal des bords supérieurs des parois des chambres ne peut être représenté. Dans le cas illustré ici, l'élément rotatif 4 comprend quatre rouleaux 5a, 5b, 5c, 5d individuels dont le sens de rotation est indiqué par la flèche F2. Les roulettes de chaque rouleau sont dans cette configuration longitudinalement alignées dans le même plan et ne sont donc pas décalées les unes par rapport aux autres.

Il n'est pas souhaitable de multiplier exagérément le nombre de roulettes : si celles-ci sont trop nombreuses et/ou trop larges et tendent vers donc la forme d'un véritable tonneau en continu, l'effet souhaité de démoulage ne pourrait pas être obtenu.

En effet, l'expérience a montré que si l'élément rotatif est un élément unique ayant la forme d'un véritable tonneau tournant sur son axe, donc procure des déformations transversales et longitudinales, on n'obtient pas de démoulage. De plus un tonneau, même comportant des reliefs, ne procure pas non plus l'effet souhaité.

Le nombre et la largeur des rondelles sont de la compétence de l'homme de l'art et peuvent être optimisés à l'aide de quelques opérations simples de routine.

On distingue enfin le support latéral 7 en croix des quatre rouleaux.

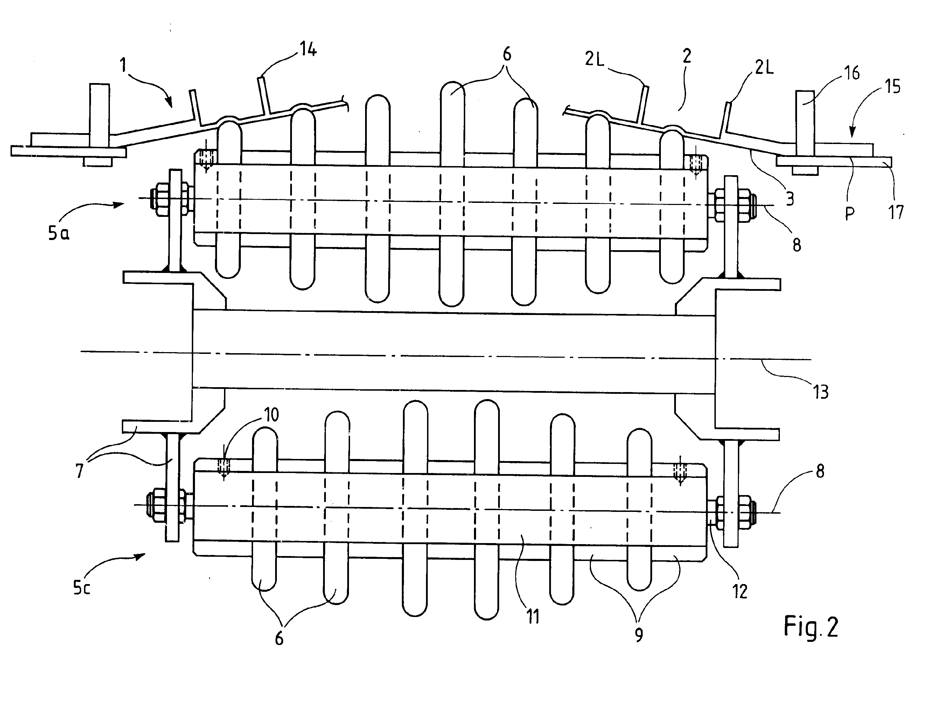

Sur la figure 2, qui représente deux rouleaux d'un élément rotatif sur leur support, l'on distingue le détail de deux rouleaux individuels 5a et 5c ; en particulier on distingue leur axe 8, les entretoises 9 permettant l'écartement des diverses rondelles 6 et le blocage des rondelles externes grâce à une vis 10, lesdites rondelles 6 étant en rotation libre autour de leur support 11.

Pour diminuer au maximum les frottements, comme souhaité, le support 11 des rondelles peut être lui-même libre en rotation vis à vis de son propre support 12 qui peut être un axe de tout type.

On distingue également le plan P au niveau duquel est fixée la base 3 des chambres de moulage. Sur le schéma on voit clairement que compte tenu du diamètre des différentes rondelles 6 et de l'écartement de leur axe 8 vis à vis de celui 13 de l'élément rotatif, la base 3 de chaque chambre de moulage est enfoncée à chaque passage des rondelles 6 et subit en même temps une percussion.

On distingue également sur cette figure le léger écartement transversal des bords supérieurs 14 des parois latérales de chaque moule. La coopération de l'écartement des quatre parois des moules illustrés ici avec les chocs fournis par les rondelles permet d'obtenir un excellent démoulage réglable en éjection ou en démoulage partiel selon la vitesse des différents éléments en cause et leur taille.

Il est bien évident que pour la facilité de l'exposé, les moules ici représentés comportent des chambres de moulages parallélélipédiques ou cubiques mais la forme des chambres de moulage peut être quelconque en particulier hémisphérique dans la mesure où, comme le conçoit l'homme de l'art, l'orifice supérieur des moules peut être suffisamment écarté de telle manière que la partie la plus large de l'objet moulé puisse être éjectée sans problème ; la terminologie de certaines parties de l'exposé, comme parois "latérales" des chambres doit être adaptée en conséquence. Ainsi, si l'on souhaite, les objets moulés pourraient avoir une forme trapézoïdale dont la plus petite base serait du côté de l'ouverture du moule et la plus grande base du côté des rondelles dans la mesure où l'écartement procuré par l'effet de tonneau serait tel que l'écartement des parois des chambres de moulage soit toujours au moins légèrement supérieur à cette grande base. Le raisonnement s'applique également dans le cas des moules aux côtés de formes cylindirques ou encore plus complexes.

On distingue aussi le support 7 des rouleaux. Le mécanisme d'entraînement du support, et donc de l'élément rotatif n'est pas illustré, car classique et de tout type connu. La fixation des rouleaux sur le support latéral nécessite pas non plus d'exposé particulier.

On distingue enfin un type de fixation et de maintien latéral des blocs de moulage. Les bords 15 des blocs sont maintenus à l'aide d'orifices ménagés dans les bords 15 des ergots 16 engagé dans ces orifices. Le système de maintien est complété par exemple d'écrous (non représentés) coopérant avec le filetage des ergots (filetages non représentés), de goupilles, de clips ou autres systèmes. Les ergots sont ici fixés à une courroie 17 qui serten même temps à l'entraînement, en coopération avec des poulies, et au support du bloc de démoulage. On voit clairement le niveau relatif de la base du bloc vis à vis des roulettes de l'élément rotatif.

## Revendications

1. Dispositif de démoulage d'objets renfermés dans un moule ouvert en matière déformable en toutes les directions, caractérisé en ce qu'il comprend un bloc (1) de moulage muni d'une pluralité de chambres (2) de moulage , ledit bloc (1) étant associé à un moyen de déplacement en translation, et étant maintenu et tendu par ses bords (15) latéraux, en ce qu'il comprend des moyens (5a, 5b, 5c, 5d) d'écartement simultanément transversal et longitudinal des parois latérales (2L) des chambres de moulage et en ce qu'il comprend des moyens (5a, 5b, 5c, 5d) de percussion et d'enfoncement simultanés de la base (3) des chambres (2) de moulage.

2. Dispositif selon la revendication 1, caractérisé en ce que les moyens (5a, 5b, 5c, 5d) d'écartement longitudinal et transversal des parois latérales (2L) des chambres (2) de moulage sont combinés.

3. Dispositif selon la revendication 2, caractérisé en ce que les moyens (5a, 5b, 5c, 5d) d'écartement longitudinal et transversal des parois latérales (2L) des chambres (2) de moulage sont combinés aussi aux moyens (5a, 5b, 5c, 5d) de percussion et d'enfoncement simultané de la base desdites chambres (2).

4. Dispositif selon la revendication 2 ou 3, caractérisé en ce que les moyens (5a, 5b, 5c, 5d) d'écartement longitudinal et transversal des parois latérales (2L) des chambres (2) de moulage sont combinées en un élément rotatif dont les parties extérieures affectent pendant leur rotation la forme d'un tonneau ou encore d'une olive procurant ainsi un écartement longitudinal et transversal des chambres (2) de moulage.

5. Dispositif selon la revendication 4, caractérisé en ce que l'élément rotatif est constitué d'une pluralité de rouleaux (5a, 5b, 5c, 5d) de démoulage.

6. Dispositif selon la revendication 5, caractérisé en ce que les rouleaux (5a, 5b, 5c, 5d) comportent une pluralité de rondelles (6) de diamètres tels que la forme générale de l'ensemble des rondelles d'un même rouleau affecte la forme d'un tonneau.

7. Dispositif selon l'une quelconque de revendications 1 à 6, caractérisé en ce que le bloc (1) de moulage se déplace sur un élément rotatif de démoulage comportant en même temps des moyens (5a, 5b, 5c, 5d) de pression et d'enfoncement simultanés de la base des chambres (2) de moulage et des moyens (5a, 5b, 5c, 5d) d'écartement longitudinal et transversal desdites chambres (2), les parties périphériques dudit élément rotatif de démoulage se déplaçant en contact de la base (3) du bloc de moulage, selon une vitesse tangentielle de déplacement plus élevée que la vitesse de déplacement en translation du bloc (1) de moulage.

8. Dispositif selon la revendication 6 ou 7, caractérisé en ce que les rondelles (6) sont individuellement libres de rotation autour de leur axe (8).

9. Procédé de démoulage d'objets renfermés dans un moule ouvert en matière déformable dans toutes les directions caractérisé en ce que l'on soumet un bloc (1) de moulage muni d'une pluralité de chambres (2) de moulage à une percussion et un enfoncement simultanés de la base desdites chambres (2) de moulage, en écartant simultanément latéralement et longitudinalement les parois latérales desdites chambres (2) de moulage.

10. Procédé selon la revendicaiton 9, caractérisé en ce que la percussion et l'enfoncement simultanés de la base des chambres (2) de moulage sont obtenus à l'aide d'un élément rotatif.
